# EUROPEAN PATENT APPLICATION

(11) **EP 3 263 538 A1**
(43) Date of publication of application: **03.01.2018**
(21) Application number: 17382391.5
(22) Date of filing: 23.06.2017
(51) Int. Cl.: C04B 41/52

(54) **METHOD FOR REINFORCING A PIECE OF NATURAL, MINERAL OR SYNTHETIC STONE**

(30) Priority: 29.06.2016 ES 201630885
(71) Applicant: Naies, Marie Michele, 65000 Tarbes (FR)
(72) Inventor: ABAD GONZALEZ, Ricardo, 65000 Tarbes (FR)
(74) Representative: Isern-Jara, Nuria

(57) **Abstract**

The present invention relates to a method for reinforcing a piece (20, 30, 40) of natural, mineral or synthetic stone that comprises at least one binder (100) that additionally includes a waste material (200) and/or a mesh made up of waste material (300) that comprises the steps of: a) applying a binder (100) on a surface of some of the sides of the piece or on the surface of two opposing sides of the piece, it being introduced into the fissures, hairline fractures and/or hollows that could be in the piece, b) applying the waste material (200) on said binder (100) or applying the mesh made up of waste material (300) on said binder (100) or applying on said binder (100) the waste material (200) and the mesh made up of waste material (300) and c) drying said mixture with the binder (100) and/or the waste material (200) and/or the mesh made up of waste material (300).

## Description

### Field of the invention

The present invention focuses on the field of obtaining and treating natural, mineral or synthetic stone and particularly on the treatment for reinforcing a piece of said stone to prevent the breakage thereof from when it is extracted from the quarry, or factory in the case of synthetic stone, until the manufacturing or obtention process of the final product is completed.

### Background of the invention

Quarries are the spaces offered by nature where man goes, aided by means of mechanisms in order to access and extract natural or mineral stone. The mining performance of these quarries is very low, since no more than 15% of all of the extracted product is usually utilized.

The extraction is generally performed in the shape of blocks for the subsequent elaboration of others derived in factories most suitable for it. Said blocks are cut in the factories into slabs or pieces of varying thicknesses, but sometimes fissures, known as hairline fractures in jargon, hollows or cracks appear which impede the maximization of the performance when cutting up the piece, since it can cause the breakage thereof. Normally, there is a loss of 30% more in the performance of the blocks that arrive at the factory, mainly due to the natural fissures or hairline fractures that the natural stone has and that can be seen when the blocks are cut into slabs.

When there are hairline fractures or fissures, in general the material cannot be used because when handled, in the cutting, it tends to break.

Some reinforcement systems for the slabs are known that consist of pouring a certain amount of polyester resin over them which is extended manually, for example, with the assistance of a trowel, using masks and other protective elements since this type of resin is harmful to the skin and other organs, since it contains styrene, being highly toxic and even carcinogenic. After applying the polyester resin, a plastic mesh is extended that stays adhered once the resin is dry.

This method has several problems. For example, the mesh is made of plastic, in other words, a product that is not very porous, that therefore does not absorb the resin and has little adherence and is easily detached when handled or touched. This effect especially manifests itself when the slab with the resin and the plastic mesh needs to be cut, as the cutting disc makes the mesh detach easily as it passes by and does not achieve the desired result.

Another type of reinforcement system uses a fiber cement plate that is also stuck to the piece with polyester resin, but because of the toxicity thereof and the incompatibility with natural stone, it does not offer an optimal solution to the posed technical problem or to the market.

Reinforcement solutions based on ceramic material stuck with resin are also known, but likewise, this can be incompatible with the natural stone and the high production cost thereof, as well as the need to be fit to certain sizes for the manufacturing of the ceramic piece, which does not make it viable.

### Description of the invention

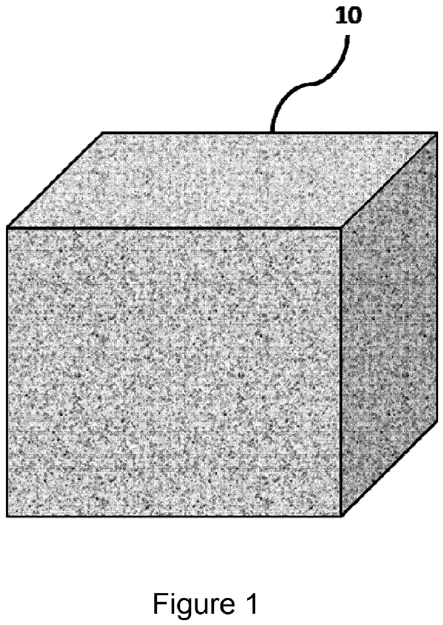

It is necessary to offer an alternative to the state of the art that covers the gaps found in it and therefore a method is shown for reinforcing the natural, mineral or synthetic stone, in order to optimize the use thereof. Said reinforcement is carried out on the piece that comes out of the cutting of the block (10, Figure 1) extracted from the quarry or artificial production and that can be done on one or several faces thereof and with the main objective of preventing the breakage thereof as a consequence, mainly, of the hairline fractures or fissures that it could have.

Specifically, the present invention shows a method for reinforcing a piece (20, 30, 40) of natural, mineral or synthetic stone that comprises at least one binder (100) that additionally includes a waste material (200) and/or a mesh made up of waste material (300) that comprises the steps of: a) applying a binder (100) on a surface of some of the sides of the piece or on the surface of two opposing sides of the piece, it being introduced into the fissures, hairline fractures and/or hollows that could be in the piece, b) applying the waste material (200) on said binder (100) or applying the mesh made up of waste material (300) on said binder (100) or applying on said binder (100) the waste material (200) and the mesh made up of waste material (300) and c) drying said mixture with the binder (100) and/or the waste material (200) and/or the mesh made up of waste material (300).

### Brief description of the drawings

In order to assist in a better understanding of the characteristics of the invention according to a practical preferred embodiment thereof and with the aim of complementing this description, the following figures are attached constituting an integral part of the same, which, by way of illustration and non-limitation, represent the following:
Figure 1 shows an example of a block of stone obtained from a quarry or synthetically manufactured.

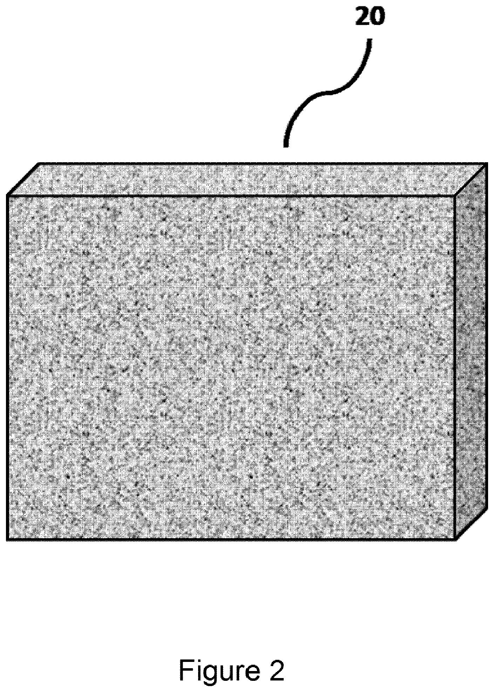

Figure 2 shows a piece of stone with a slab shape on which the method object of this invention can be applied.

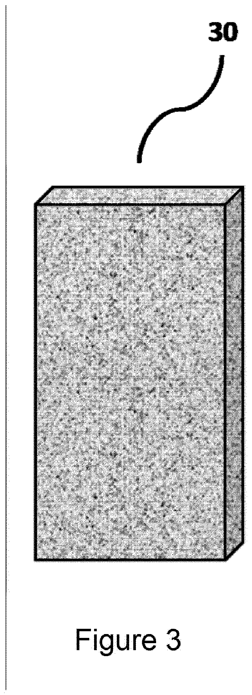

Figure 3 shows a piece of stone with a band shape on which the method object of this invention can be applied.

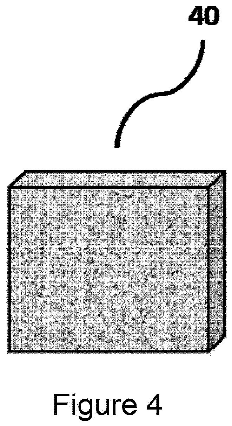

Figure 4 shows a piece of stone with a tile shape on which the method object of this invention can be applied.
Figure 5 shows an exemplary embodiment of a mesh made with waste of vegetable, animal or industrial origin on the binder, which can be applied in the method object of this invention.
Figure 6 shows an example of a piece with a slab shape wherein it has, in a frontal surface, the reinforcement with the binder and with the waste material and/or the mesh made from waste.
Figure 7 shows an example of a side view of a piece with a slab shape wherein the binder applied on one of the surfaces thereof and then the waste material that can have a mesh shape is seen.
Figure 8 shows an example of a side view of a piece with a slab shape wherein the binder applied on one of the surfaces thereof and then the waste material that can have a mesh shape is seen.
Figure 9 shows an example of a side view of a slab, with reinforcement in two of the opposing surfaces thereof and which are subsequently cut by the central portion thereof.
Figure 10 shows an example of a side view of the two pieces obtained from one initial piece with reinforcement in two of the opposing surfaces thereof and wherein upon cutting said piece into two by the central portion, each of the two pieces obtained maintains a reinforced surface.
Figure 11 shows an example of a three-dimensional view of a piece with reinforcement in a surface.
Figure 12 shows an example of a three-dimensional view of a piece with reinforcement in two opposing surfaces.

### Detailed description of the invention

The elements defined in this detailed description are provided to help achieve a comprehensive understanding of the invention. As a result, a person skilled in the art will recognize that variations and modifications to the embodiments described in this document can be made without deviating from the scope and spirit of the invention. Moreover, a detailed description of the functions and the elements that are sufficiently known has been omitted for reasons of clarity and concision.

The present invention relates to a method for reinforcing natural, mineral or synthetic stone wherein reinforcement is applied on one or both faces of the piece (slab (20), band (30) or tile (40)) consisting of a binder (100) in paste form and, optionally, on top of that binder, waste (200) of mineral, vegetable or animal origin.

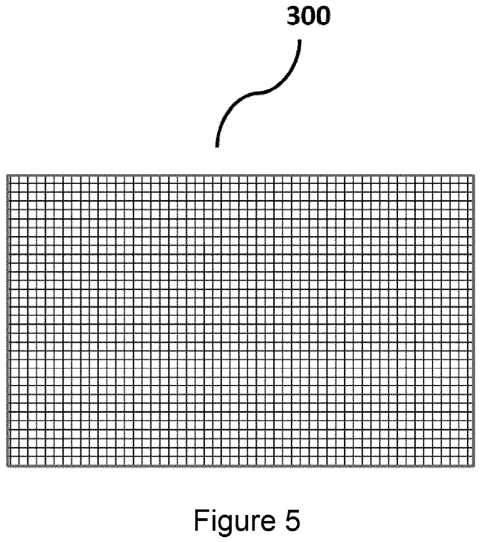

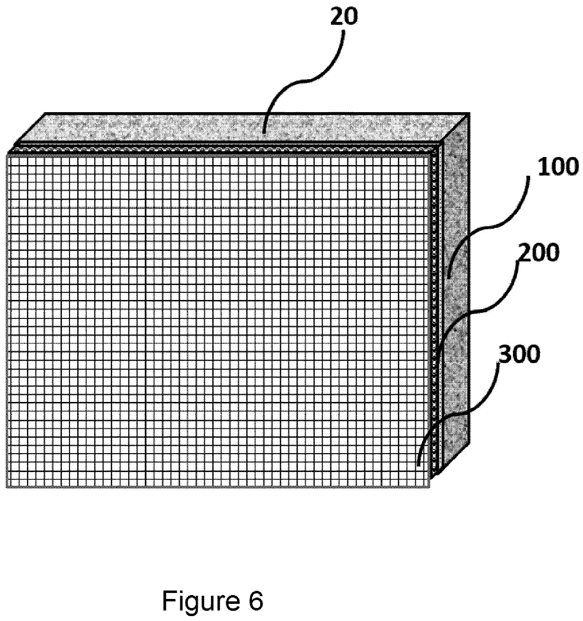

In addition to the binder (100), a mesh (300) can be deposited on them that is also made up of waste of vegetable, animal or industrial origin, with a mesh shape (300) according to Figures 5 or 6.

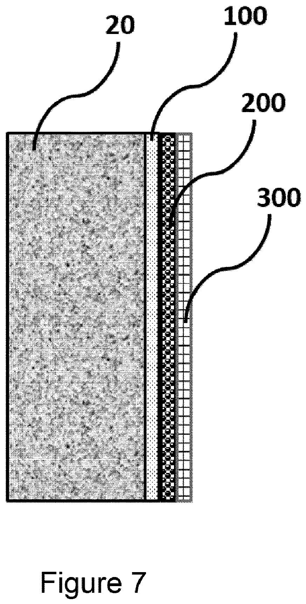

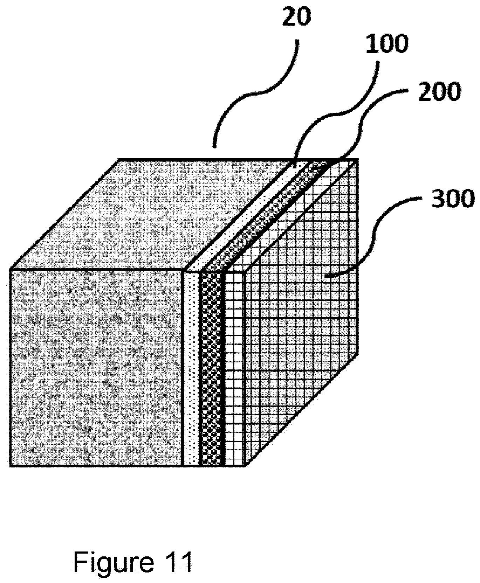

The assembly can have a sandwich shape or not, in the case of performing the reinforcement for one (Figures 7 and 11) or both faces (8 and 12), depending on the subsequent manufacturing destination of the piece (20, 30, 40). In the same way that said reinforcement can be applied on said natural or mineral stone, it can be applied on slabs, bands, tiles, originating from synthetic blocks made of synthetic stone.

The method therefore consists of applying a reinforcement material on one or both faces of a slab (20), band (30) or tile (40) made of natural, mineral or synthetic stone.

Upon being applied, the reinforcement material is introduced into the fissures, hairline fractures or hollows of the piece (20, 30, 40) such that the imperfections are covered, therefore reinforcing the union thereof and preventing the breakage thereof in the calibrating, cleaning and/or cutting process.

Said reinforcement material is made up of a mixture, which acts as a binder (100), which can be made of at least magnesium oxychloride, polyamide and/or silanes and/or additives and/or a combination of one or more thereof, mixed or applied on said binder mixture (100), waste materials (200) are added, and both the waste material (200) applied directly on the binder (100) and the mesh (300) are made of natural or mineral stone waste, vegetable waste or industrial waste or a combination of two or more of these types of waste.

The waste of vegetable origin can be, in a non-limiting manner, jute, sawdust, hemp, esparto, paper or cork. The waste of animal origin can be, in a non-limiting manner, wool and the waste of industrial origin can be, in a non-limiting manner, glass or expanded polystyrene.

Additionally, said mixture of the reinforcement material can contain additives. These additives will preferably include plaster or salt or a combination of both, which will facilitate the subsequent drying of the reinforcement. Optionally, pigments that assimilate the color of the stone can even be included in the reinforcement.

The application of the mixture or binder (100) on the piece (20, 30, 40) can be done manually, such as with a trowel, a spatula, a brush, etc., but also by mechanical means, such as a drencher system of the mixture that is made to fall over the piece while it is moved on an automated conveyor belt.

In one preferred embodiment, all the materials that make up the reinforcement, both the mixture or binder (100) and the possible types of waste of the waste material (200) or the mesh (300), are ecologically friendly, coming from over-mining and/or human activity over natural resources, thus facilitating the profitability and sustainability thereof and, moreover, without any degree of toxicity.

Once the mixture (100) is applied, the waste material (200), and optionally the mesh made from waste (300), is dried, either at room temperature or by introducing the piece into an oven at a temperature in the range between 30º and 100º centigrade.

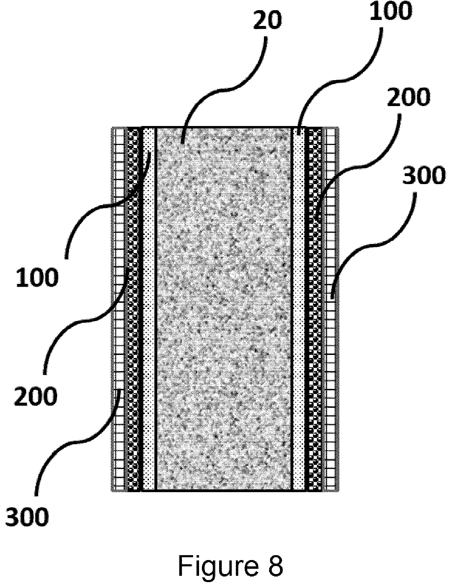

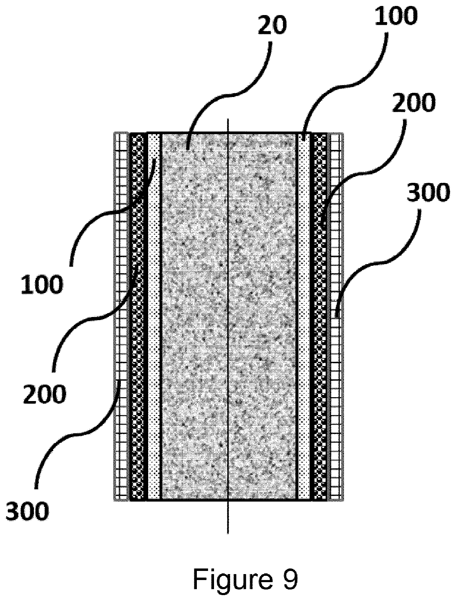

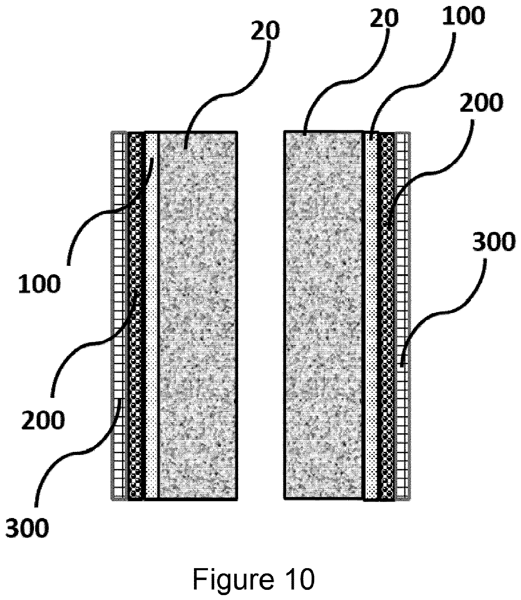

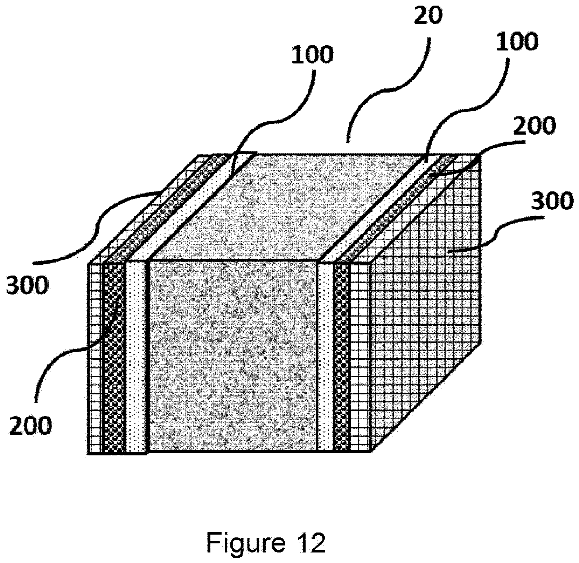

If the reinforcement is applied on both faces of the slab (20), tile (30) or band (40), once the mixture (100) is dried, it proceeds to the cutting, or longitudinal cuts of the piece obtaining tiles or bands (Figures 8, 9, 10 and 12); which, upon being cut by the longitudinal center thereof, will allow for safely and efficiently duplicating the production.

Whether the mixture or binder (100) has been applied and dried with the waste material (200) and/or mesh made of waste material (300) only on one face of the piece (Figures 7 and 11) or if it has been applied on two (Figures 8, 9, 10 and 12) and afterwards has proceeded to the cutting into pieces thereof, and other pieces are obtained, one with only one reinforcement face, it then may or may not proceed to calibrate the piece, the cleaning thereof, specific cut, etc. according to the final destination of the piece. In any case, the face or side wherein the reinforcement has been applied has good adherence, for example, for construction applications.

Optionally, on the visible face of the piece, generally the cutting face and therefore the face opposing the initial reinforcement, applying a reinforcement only made of binder (100) and waste material (200) could be required in order to putty, seal or reinforce the imperfections that this face could have, such as hairline fractures or fissures. This puttying or sealing can also optionally include additives in order to improve the drying process and/or pigments that resemble the color of the stone.

## Claims

1. A method for reinforcing a piece (20, 30, 40) of natural, mineral or synthetic stone comprising at least one binder (100), **characterized in that** it further includes a waste material (200) and/or a mesh made with waste material (300) that comprises the steps of:
a) applying a binder (100) on a surface of some of the sides of the piece or on the surface of two opposing sides of the piece, being introduced into the fissures, hairline fractures and/or hollows that could be in the piece,
b) applying the waste material (200) on said binder (100) or applying the mesh made with waste material (300) on said binder (100) or applying on said binder (100) the waste material (200) and the mesh made with waste material (300), and
c) drying said mixture with the binder (100) and/or the waste material (200) and/or the mesh made with waste material (300).

2. The method for reinforcing a piece of natural, mineral or synthetic stone according to claim 1, **characterized in that** it further comprises one or several of the steps of:
d) calibrating the piece (20, 30, 40),
e) cleaning the piece (20, 30, 40), or
f) cutting the piece (20, 30, 40).

3. The method for reinforcing a piece (20, 30, 40) of natural, mineral or synthetic stone according to claim 1, **characterized in that** the step a) of applying said binder (100) on at least the surface of one of the sides of said piece, either carrying it out manually or carrying it out mechanically, wherein said binder (100) is applied with a drencher system on the surface of the piece while said piece goes along a conveyor belt.

4. The method for reinforcing a piece (20, 30, 40) of natural, mineral or synthetic stone according to claim 1, **characterized in that** said binder (100) is magnesium oxychloride, polyamide, silanes and additives or a combination of two or more thereof.

5. The method for reinforcing a piece (20, 30, 40) of natural, mineral or synthetic stone according to claim 4 **characterized in that** said additive can be plaster, salt or a combination of both.

6. The method for reinforcing a piece (20, 30, 40) of natural, mineral or synthetic stone according to claim 1 **characterized in that** said waste material (200) and/or said waste material of said mesh (300) is natural or mineral stone, is vegetable waste, is mineral waste, is animal waste or is industrial waste or a combination of two or more thereof.

7. The method for reinforcing a piece (20, 30, 40) of natural, mineral or synthetic stone according to claim 6, **characterized in that** said waste material (200) and/or said waste material of said mesh (300) contains waste of vegetable origin, said wastes being yute, sawdust, hemp, esparto, paper or cork or a combination of two or more thereof.

8. The method for reinforcing a piece (20, 30, 40) of natural, mineral or synthetic stone according to claim 6, **characterized in that** said waste material (200) and/or said waste material of said mesh (300) contains waste of animal origin, said waste is wool.

9. The method for reinforcing a piece (20, 30, 40) of natural, mineral or synthetic stone according to claim 6, **characterized in that** said waste material (200) and/or said waste material of said mesh (300) contains waste of industrial origin, said waste is glass or expanded polystyrene or a combination of both.

10. The method for reinforcing a piece (20, 30, 40) of natural, mineral or synthetic stone according to claim 1, **characterized in that** the step c) of drying said mixture with the binder (100) and/or the waste material (200) and/or the mesh made with waste material (300) is carried out at room temperature.

11. The method for reinforcing a piece (20, 30, 40) of natural, mineral or synthetic stone according to claim 1, **characterized in that** the step c) of drying said mixture with the binder (100) and/or the waste material (200) and/or the mesh made with waste material (300) is carried out by introducing the piece (20, 30, 40) into an oven at a temperature between 30 and 100 degrees centigrade.

12. The method for reinforcing a piece (20, 30, 40) of natural, mineral or synthetic stone according to claim 1, wherein after the step c) of drying said mixture with the binder (100) and/or the waste material (200) and/or the mesh made with waste material (300) in both opposing faces further includes the step of cutting them, maintaining in each portion of the piece a reinforced surface with said binder (100) and/or said waste material (200) and/or said waste material of said mesh (300).

13. The method for reinforcing a piece (20, 30, 40) of natural, mineral or synthetic stone according to claim 1, wherein said piece (20, 30, 40) has the shape of a slab (20), tile (30) or band (40).
